Europäisches Patentamt

European Patent Office

Office européen des brevets

(19)

(11) Numéro de publication: **0 318 388**
**A1**

(12) # DEMANDE DE BREVET EUROPEEN

(21) Numéro de dépôt: **88402960.4**

(22) Date de dépôt: **24.11.88**

(51) Int. Cl.⁴: **G 01 F 1/712**
**G 01 P 5/18**

(30) Priorité: **24.11.87 FR 8716268**

(43) Date de publication de la demande:
**31.05.89 Bulletin 89/22**

(84) Etats contractants désignés:
**AT BE CH DE ES FR GB GR IT LI LU NL SE**

(71) Demandeur: **ASSOCIATION POUR LA RECHERCHE ET LE DEVELOPPEMENT DES METHODES ET PROCESSUS INDUSTRIELS (ARMINES)**
**60, Boulevard Saint-Michel**
**F-75272 Paris Cédex 06  (FR)**

(72) Inventeur: **Gicquel, Renaud**
**Villa Vire Vent 385, Chemin Notre-Dame**
**F-06220 Vallauris  (FR)**

**Gschwind, Michel**
**Lot des Hauts de Veyrières Chemin de la Verrière**
**F-06560 Valbonne  (FR)**

**Robert, Joel**
**Complexe Scolaire International Chambre 7208**
**Sophia Antipolis F-06565 Valbonne Cédex  (FR)**

(74) Mandataire: **Nony, Michel et al**
**Cabinet NONY & CIE 29, rue Cambacérès**
**F-75008 Paris  (FR)**

(54) **Dispositif pour la mesure d'un débit de fluide dans une canalisation.**

(57) L'invention est relative à un dispositif pour la mesure d'un débit de fluide dans une canalisation.

Il comprend un élément chauffant (4) et au moins un capteur de température (6,7) agencés pour être disposés autour de la canalisation, des moyens (8) pour appliquer audit élément chauffant une puissance électrique prédéterminée, et des moyens pour déterminer le débit dans la canalisation à partir du signal transmis par le capteur.

Fig.1

**Description**

## Dispositif pour la mesure d'un débit de fluide dans une canalisation.

La présente invention concerne un dispositif pour la mesure d'un débit de fluide dans une canalisation.

Parmi les nombreux types de débitmètres existants, les débitmètres thermiques comportent une source de chaleur destinée à augmenter localement la température d'un fluide circulant dans une canalisation et des capteurs de température permettant de mesurer cette augmentation afin d'en déduire le débit.

Tous les dispositifs connus présentent toutefois l'inconvénient de comporter des parties immergées dans le fluide, de telle sorte qu'ils ne sont pas utilisables pour mesurer depuis l'extérieur d'une canalisation existante, le débit qui y circule.

La présente invention vise à fournir un dispositif permettant d'effectuer une telle mesure sans intervention sur la canalisation elle-même.

A cet effet, l'invention a pour objet un dispositif pour la mesure d'un débit de fluide dans une canalisation, caractérisé par le fait qu'il comprend un élément chauffant tel qu'un collier et au moins un capteur de température, tel qu'une sonde-fil agencés pour être disposés autour de la canalisation, des moyens pour appliquer audit élément chauffant une puissance électrique prédéterminée, et des moyens pour déterminer le débit dans la canalisation à partir du signal transmis par le capteur.

Aussi bien la source de chaleur, à savoir l'élément chauffant, que les capteurs de température, sont par conséquent disposés à l'extérieur de la canalisation autour de cette dernière, de sorte que le dispositif selon l'invention peut être instantanément adapté sur toute canalisation existante.

Dans un premier mode de réalisation, ladite puissance prédéterminée est appliquée pendant une durée limitée, le dispositif comprenant un seul capteur, et des moyens pour déterminer le maximum du signal transmis par le capteur.

Dans un autre mode de réalisation, ladite puissance prédéterminée est également appliquée pendant une durée limitée, le dispositif ne comprenant toujours qu'un seul capteur, mais les moyens de détermination du débit comprennent des moyens pour déterminer le déphasage entre l'entrée en puissance de l'élément chauffant et le signal transmis par le capteur.

Ce déphasage peut notamment être déterminé à l'aide de moyens permettant de calculer le maximum de la fonction d'intercorrélation entre l'entrée en puissance de l'élement chauffant et le signal transmis par le capteur.

Dans un troisième mode de réalisation, ladite puissance prédéterminée est une puissance périodique, le dispositif comprenant alors deux capteurs et des moyens pour déterminer le déphasage entre les signaux transmis par les deux capteurs.

Ces moyens pour déterminer le déphasage peuvent alors comprendre des moyens permettant de calculer le maximum de la fonction d'intercorrélation entre les signaux transmis par les deux capteurs.

Le débit peut alors être déterminé suivant le cas à partir de ce déphasage, ou à partir du maximum d'élévation de température, soit directement par le calcul, soit à l'aide d'une courbe d'étalonnage, préalablement mémorisée.

On préférera toutefois généralement utiliser une courbe d'étalonnage, du fait du grand nombre de paramètres intervenant dans le calcul et dépendant d'une part des caractéristiques physiques du fluide, et d'autre part de la canalisation elle-même.

On décrira maintenant à titre d'exemples non limitatifs, trois modes de réalisation particuliers de l'invention, en référence aux dessins schématiques annexés dans lesquels :

- la figure 1 représente un mode de réalisation utilisant deux capteurs de température,
- la figure 2 représente un mode de réalisation utilisant un seul capteur de température,
- la figure 3 représente un autre mode de réalisation utilisant un seul capteur de température,
- la figure 4 représente la variation de la température en fonction du temps, mesurée par un capteur disposé en aval de l'élément chauffant lorsqu'un créneau de puissance est appliqué à ce dernier,
- la figure 5 représente la relation entre le débit et le maximum de température relevé à la figure 4, pour une canalisation de 16,7 mm de diamètre intérieur et
- la figure 6 représente la relation entre le débit et le déphasage entre la puissance fournie à l'élément chauffant et la température mesurée par un capteur disposé en aval de cet élément, pour la même canalisation .

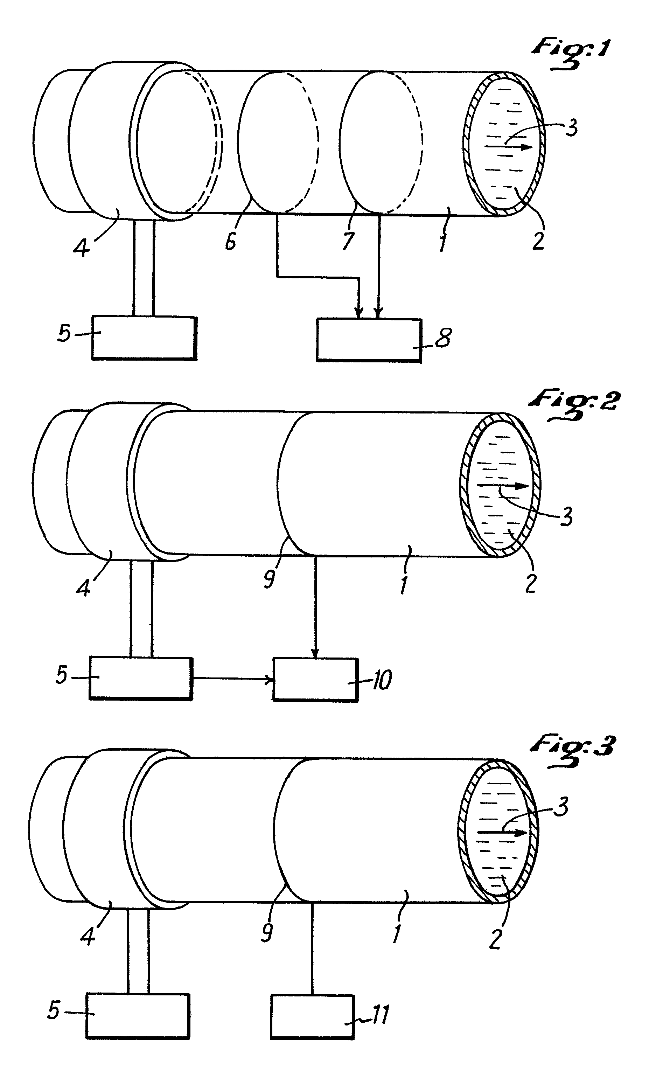

La figure 1 représente une canalisation 1 dans laquelle un fluide 2 circule dans le sens de la flèche 3. Un collier chauffant 4 est disposé autour de la canalisation, et relié à un générateur de fonction 5.

Deux sondes-fils 6 et 7 sont également disposées autour de la canalisation en aval du collier 4, et leurs sorties sont reliées à une unité de calcul 8.

A titre d'exemple la sonde 6 peut être placée à une distance de l'ordre de 5 à 10cm de l'axe du collier 4, et la sonde 7 à une distance de l'ordre de 10 à 20 cm.

Le générateur de fonction applique au collier 4 une puissance périodique, par exemple un signal carré de période égale à 60 secondes pour une puissance de 150 watts.

Les mesures effectuées par les sondes 6 et 7 débutent après la stabilisation du régime, qui intervient au bout de quelques périodes, et sont séparées par un intervalle de temps dt égal par exemple à 0.2 seconde.

Les signaux transmis par les deux sondes sont alors lissés, et l'unité 8 calcule le déphasage entre les températures mesurées par les deux sondes, par exemple par le maximum de la fonction d'intercorrélation :

$$F(n) = \frac{1}{N} \sum_{k=1}^{N} s1(k\ dt) \cdot s2((k+n)\ dt)$$

ou s1 ou s2 sont les signaux transmis par les sondes 6 et 7.

On peut ensuite, à partir du déphasage, calculer le débit dans le cas d'un tube lisse, à l'aide d'un modèle mathématique intégré à l'unité de calcul 8. On doit toutefois connaître à cet effet les caractéristiques thermiques du fluide.

Dans tous les cas, on peut de toute manière déterminer le débit à partir du déphasage à l'aide d'une courbe d'étalonnage.

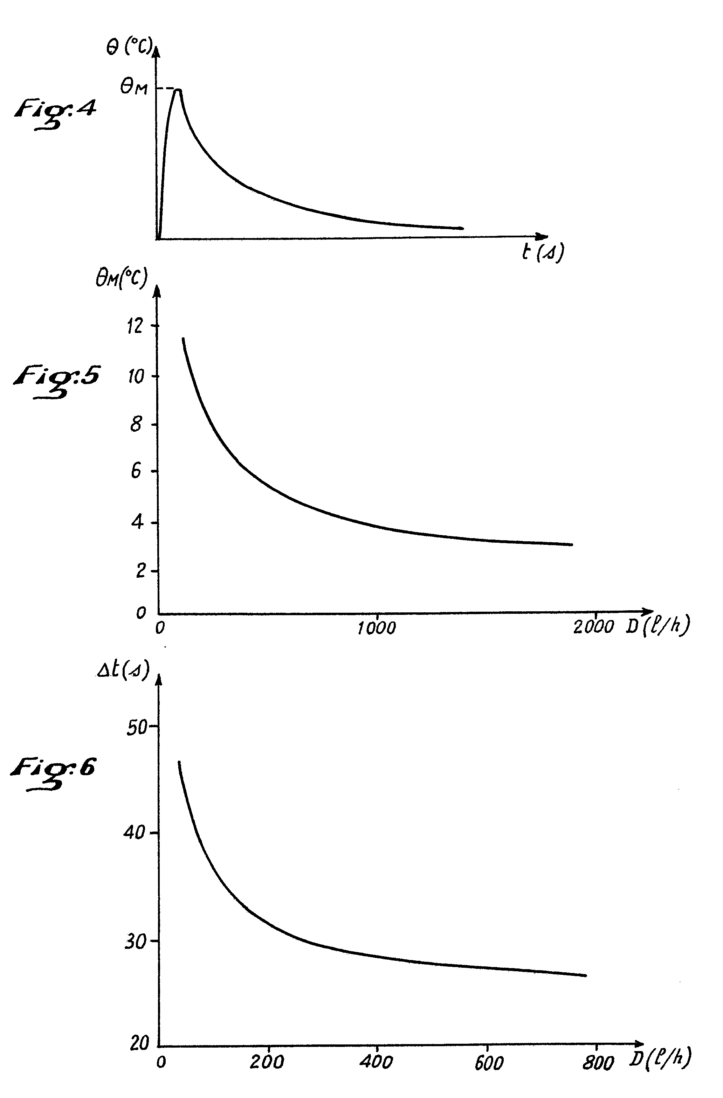

Dans le mode de réalisation de la figure 2, on utilise une seule sonde-fil 9, disposée par exemple à une distance de l'ordre de 5cm du collier 4, et reliée à une unité de calcul 10 à laquelle est également relié le générateur de fonction 5.

Dans ce cas, on applique au collier 4 un seul créneau de puissance, par exemple 150 watts pendant une durée de 30 secondes.

Une mesure à l'aide de la sonde 9 est effectuée par exemple toutes les 0,2 seconde, en commençant dès le début du créneau.

Comme précédemment, le signal reçu de la sonde est lissé, après quoi l'unité 10 calcule le déphasage entre l'entrée en puissance dans le collier 4 et la température mesurée par la sonde 9. Ce déphasage se calcule par exemple à l'aide du maximum de la fonction d'intercorrélation :

$$F(n) = \frac{1}{N} \sum_{k=1}^{N} p(k\ dt)\ s((k+n)\ dt)$$

où: $p(t) = 1$ si $t < 30$ secondes,
$p(t) = 0$ si $t > 30$ secondes,
$s(t)$ est le signal transmis par la sonde.

Le débit est alors déterminé à partir de ce déphasage à l'aide d'une courbe d'étalonnage qui peut être mémorisée dans l'unité de calcul 10.

La figure 6 montre une telle courbe représentant le déphasage $\Delta t$ en fonction du débit D, pour un débit allant jusqu'à 800 litres à l'heure.

Dans le mode de réalisation de la figure 3, la sonde 9 est seule reliée à une unité de calcul 11.

Comme dans le cas de la figure 2, on applique au collier 4 un créneau de 150 watts pendant 30 secondes. Les mesures s'effectuent également par exemple toutes les 0,2 seconde et commencent dès le début du créneau.

Après lissage, le signal transmis par la sonde 9 est illustré à la figure 4, qui représente l'élévation de la température $\theta$ en fonction du temps. Cette courbe présente un maximum $\theta_M$ et l'on a constaté que la valeur de ce maximum $\theta_M$ est directement liée au débit dans la canalisation.

L'unité de calcul 11 peut par conséquent, après avoir relevé ce maximum $\theta_M$, en déduire le débit D, à l'aide d'une courbe d'étalonnage telle que celle de la figure 5, qui représente la valeur du maximum $\theta_M$, en fonction du débit pour un débit variant jusqu'à 2.000 litres à l'heure.

Diverses variantes et modifications peuvent bien entendu être apportées à la description qui précède, sans sortir pour autant du cadre ni de l'esprit de l'invention.

## Revendications

1. Dispositif pour la mesure d'un débit de fluide dans une canalisation comprenant un élément chauffant (4) et un capteur de température (9) agencés pour être disposés autour de la canalisation, et des moyens (5) pour appliquer audit élément chauffant une puissance électrique prédéterminée, caractérisé par le fait que ladite puissance prédéterminée est appliquée pendant une durée limitée et que le dispositif comprend des moyens (11) pour déterminer le débit à partir de la valeur maximale du signal transmis par le capteur.

2. Dispositif selon la revendication 1, caractérisé par le fait qu'il comprend des moyens (11) pour mémoriser un courbe d'étalonnage.

3. Dispositif selon l'une quelconque des revendications 1 et 2, caractérisé par le fait qu'il comprend des moyens (11) pour calculer le débit.

4. Dispositif selon l'une quelconque des revendications 1 à 3, caractérisé par le fait que lesdits capteurs de température sont des sondes-fils.

5. Dispositif selon l'une quelconque des revendications 1 à 4, caractérisé par le fait que ledit élément chauffant est un collier chauffant.

*Fig:1*

*Fig:2*

*Fig:3*

Fig:4

Fig:5

Fig:6

Office européen des brevets

**RAPPORT DE RECHERCHE EUROPEENNE**

Numero de la demande

EP 88 40 2960

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | PATENT ABSTRACTS OF JAPAN, vol. 8, no. 282 (P-323)[1719], 22 décembre 1984, page 72 P 323; & JP-A-59 147 271 (FUJI DENKI SEIZO K.K.) 23-08-1984 * Résumé * | 1,3,5 | G 01 F 1/712 G 01 P 5/18 |
| Y | IDEM. --- | 2,4 | |
| Y | NL-C- 83 702 (CHARLES ENGELHARD INC.) * Colonne 1, lignes 1-15; colonne 3, lignes 22-28; figure 1 * --- | 4 | |
| P,Y | FR-A-2 607 250 (CIE DES SERVICES DOWELL-SCHLUMBERGER) * Page 6, lignes 9-10; figure 7 * --- | 2 | |
| A | FR-A-2 471 593 (L. SACRE) * Page 4, lignes 18-24 * --- | 2 | |
| P,X | FR-A-2 600 776 (NOVATOME) * Résumé; page 5, ligne 24 - page 6, ligne 1; page 8, lignes 17-23; page 10, ligne 29 - page 11, ligne 4; page 13, lignes 5-9,16-18; page 14, lignes 7-9; figures 1,2,4 * --- | 1,3-5 | DOMAINES TECHNIQUES RECHERCHES (Int. Cl.4) G 01 F G 01 P |
| A | K.D. TIMMERHAUS: " Advances in cryogenic engineering", vol. 23, Proceedings of the 1977 Cryogenic Engineering Conference, Colorado, 2-5 août 1977, pages 391-396, Plenum Press, New York, US; O. TSUKAMOTO et al.: "Determination of the flow velocity of cryogenic fluid by use of a correlation technique" * Page 391, lignes 20-29; figure 1 * --- -/- | 1 | |

Le présent rapport a été établi pour toutes les revendications

| Lieu de la recherche | Date d'achèvement de la recherche | Examinateur |
|---|---|---|
| LA HAYE | 20-02-1989 | GANCI P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen
des brevets

Numero de la demande

EP 88 40 2960

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 934 566 (SIEMENS AG)<br>* Page 6, ligne 34 - page 7, ligne 11; page 8, lignes 13-18; figure 1 *<br>----- | 1 | |

**DOMAINES TECHNIQUES RECHERCHES (Int. Cl.4)**

Le présent rapport a été établi pour toutes les revendications

| Lieu de la recherche | Date d'achèvement de la recherche | Examinateur |
|---|---|---|
| LA HAYE | 20-02-1989 | GANCI P.A. |

EPO FORM 1503 03.82 (P0402)